# EUROPEAN PATENT APPLICATION

(11) **EP 3 808 514 A1**
(43) Date of publication of application: **21.04.2021**
(21) Application number: 20201947.7
(22) Date of filing: 15.10.2020
(51) Int. Cl.: B25J 15/04, B25J 19/00

(54) **MANUAL TOOL CHANGER WITH PNEUMATIC AND ELECTRICAL UTILITIES**

(30) Priority: 18.10.2019 US 201916656841
(71) Applicant: Delaware Capital Formation, Inc., Wilmington, Delaware 19809 (US)
(72) Inventor: GEARY, James, Pawcatuck, CT Connecticut 06379 (US); JENNINGS, Benjamin, Renton, WA 98055 (US); LABADIE, Gary, Auburn Hills, MI Michigan 48326 (US); MRUZIK, Jeffrey J., Livonia, MI Michigan 48154 (US)
(74) Representative: Staeger & Sperling Partnerschaftsgesellschaft mbB

(57) **Abstract**

A tool changer has a master mount and a tool mount. The tool mount includes a guide to be received in a slot in the master mount. A tapered surface on the tool mount leads the tool mount into the master mount. A latch is coupled with the master mount. The latch moves between a locked and unlocked position. A notch is present on the tool mount to receive the latch. Upon coupling, the latch is received into the notch.

## Description

### FIELD

The present disclosure relates to manual tool changers and, more particularly, to tool changers with pneumatic and electric utilities.

### BACKGROUND

Several types of manual tool changers exist in the art. These tool changers transmit pneumatics and electrical power through the robot to the master to the tool plate to the tool. Electrical connection is achieved by using a manual connection plug with a socket. These types of connectors are not designed for repeated coupling and uncoupling and in time will wear out. Additionally, traditional tool changer electric modules couple in a axial direction of the tool flange normally requiring a large protruding module to accomplish this feat.

Pneumatic connection is made by inserting one tube fitting on the tool into another on the robot. This requires a large amount of space to achieve. Further, locking features do exist. The locking feature requires the operator to close the locking lever. Failure to do so enables the tool to separate from the master unit. The locking designs have a significant backlash. Thus, this eliminates the design from applications that require excellent repeatability.

Accordingly, designers strive to improve the art. Thus, the present disclosure overcomes the disadvantages of the prior art devices.

### SUMMARY

The present disclosure provides a tool changer where the master mount half includes an automatic locking device. The tool changer provides uni-directional insertion of the tool mount half into the master mount half. Thus, the present disclosure eliminates loading of the tool mount half in a backward direction. When the tool mount half is in a proper position in the master mount half, the tool mount half is automatically locked into the master mount half. Accordingly, the tool mount half is locked in all degrees of freedom.

The master mount half provides a slot to receive the tool mount half. The slot provides contact points and clearance. Thus, the tool mount half easily slides into the master mount half. The alignment of the tool mount half and the master mount half is near the end of travel in the slot.

According to one aspect of the disclosure, a tool changer comprises a master mount and a tool mount. The tool mount includes a guide received in a slot in the master mount. A tapered surface on the tool mount leads the tool mount into the master mount. A latch is coupled with the master mount. The latch moves between a locked and unlocked position. A notch is present in the tool mount to receive the latch. Upon coupling the tool mount with the master mount, the latch is moved by the tapered surface and rides along the tool mount as the tool mount is further inserted into the master mount. A bias force is applied on the latch to engage it with the notch in the latch locking position. This locks the tool mount with the master mount. The latch includes a release. The release is activated to release the bias force of a spring withdrawing the latch from the notch. This moves the latch into its unlocked position to enable the tool mount to be removed from the master mount. The latch includes a tapered surface and a flat surface. The notch includes mating tapered and flat surfaces. The latch includes a visual indicator to identify the unlocked position. The slot is defined by a wall surface that includes at least one step. The tool mount includes a wall surface with at least one step portion to mating with the slot wall surface to align the tool mount in the master mount. The at least one step portions align with one another and are positioned near an end of the slot to align the tool mount near the end of travel. The latch rotates about a pivot secured to the master mount.

The master mount and tool mount include at least one fluid port. The master mount includes at least one recess and at least one seal in the recess. The at least one seal surrounds an end of a bore of the at least one port. A boss surrounds the bore of the at least one port on the master mount. The tool mount includes a surface with a lead in between a first surface portion and a second surface portion. One of the surface portions is raised with respect to the other to compressing the at least one seal as the tool mount is moved into a locked position.

The master mount includes a mounting flange with an electrical receptacle. The tool mount includes an electrical module with a plurality of spring probes to couple and uncouple, in a transverse direction, with the electrical receptacle. The electrical module includes an electrical cable to interface with a robot or other controller.

According to a second aspect of the disclosure, a robot includes a tool changer comprising a master mount and a tool mount. The tool mount includes a guide received in a slot in the master mount. A tapered surface on the tool mount leads the tool mount into the master mount. A latch is coupled with the master mount. The latch moves between a locked and unlocked position. A notch is present in the tool mount to receive the latch. Upon coupling the tool mount with the master mount, the latch is moved by the tapered surface and rides along the tool mount as the tool mount is further inserted into the master mount. A bias force is applied on the latch to engage it with the notch in the latch locking position. This locks the tool mount with the master mount. The latch includes a release. The release is activated to release the bias force of a spring withdrawing the latch from the notch. This moves the latch into its unlocked position to enable the tool mount to be removed from the master mount.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

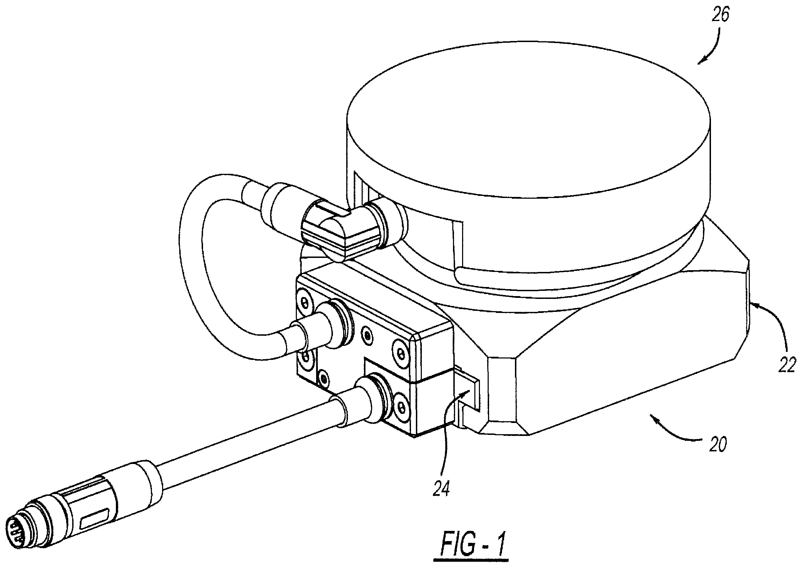

FIG. 1 is a perspective view of the tool holder on a robot.

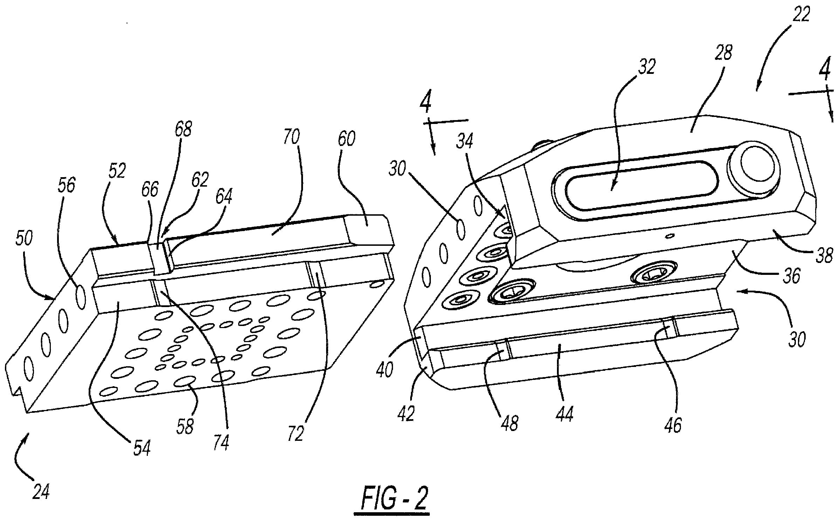

FIG. 2 is an exploded view of the tool changer.

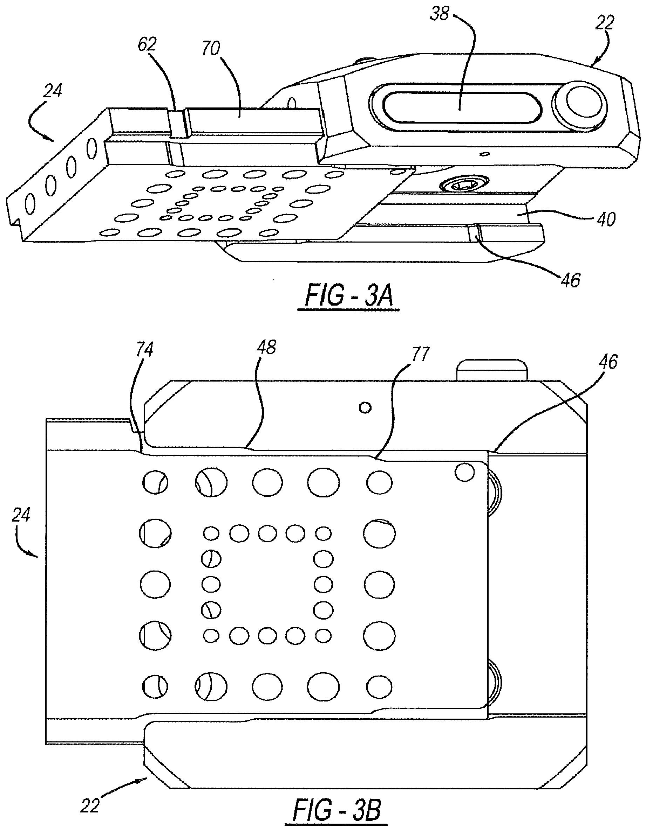

FIG. 3 is a bottom plan view of the tool changer.

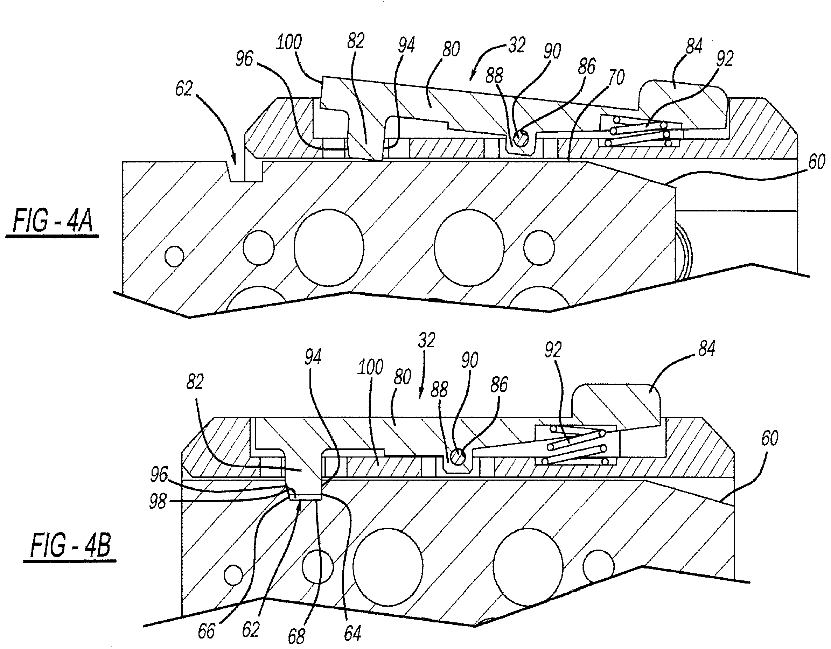

FIG. 4 is a partial cross-section view of the tool changer through line 4-4 thereof of FIG. 1.
FIG. 5 is a perspective view of the tool changer.
FIG. 6 is an exploded perspective view of the tool changer.
FIG. 7 is a cross-section view of the tool changer.
FIG. 8 is a cross-section view of the tool changer.
FIG. 9 is a perspective view of the tool changer.
FIG. 10 is an enlarged perspective of FIG. 9.

### DETAILED DESCRIPTION

Turning to the figures, a tool changer is illustrated and designated with the reference numeral 20. The tool changer 20 includes a master mount 22 and a tool mount 24. The master mount 22 is mounted to a robot 26.

The master mount 22 includes a body 28. The body 28 optionally includes one or more fluid ports 30. The body 28 includes apertures that receive fasteners to secure it to the robot 26. The body has an overall rectangular box shape including a latch 32 on one of its sides. The body 28 includes a T-shaped slot 34 that extends through the body 28. The slot 34 receives the tool mount 24 as will be described herein. The T-shaped slot 34 includes a roof 36 and two wall sections 38 and has an open bottom between the two wall sections 38. The wall sections 38 include a channel 40 and a flange wall 42. The channel 40 has an overall rectangular design; however, any polygonal or curved design could be utilized. The channel 40 extends through the body 28. The flange wall 42 includes a surface 44. The surface 44 includes one or more step portions 46, 48. The step portions 46, 48 provide alignment for the tool mount 24 as it is inserted into the master mount 22.

The tool mount 24 has a body portion 50 with an overall T-shape in front elevation. The body 50 defines a guide 52 and a mating wall 54. Also, the tool mount 24 optionally includes one or more fluid ports 56. The body 50 includes a plurality of apertures or bores 58 that enable securement of the tool mount with a tool (not shown) to be manipulated by the robot.

The guide 52 has an overall rectangular shape. The guide 52 mates with the channel 48 of the master mount 22. The guide 52 includes a tapered surface 60 as well as notch 62. The notch includes sidewalls 64, 66 as well as web 68. The wall 64 is substantially perpendicular to the guide wall 70. The wall 66 is tapered with respect to the guide wall 70.

The mating wall 54 includes at least one step portion 72 and an additional step portion 74. The step portion 72, 74 mate with the step portions 46, 48 of the flange wall 42. The step portions 72, 74 enhance the alignment of the tool mount in the master mount 22.

Latch 32 includes an elongated body 80 with a hook 82 and a release 84. The elongated body 80 includes a bore 86 and a boss portion 88 to receive a pin 90. The pin 90 secures the latch 32 on the master mount 22. Additionally, the pin 90 enables the latch to rotate on the master mount 22. A biasing member 92, such as a conical spring, provides a bias for the latch 32. Thus, the release 84 must be pushed into the master mount 22 in order to remove or release the hook 82 from the notch 62 of the guide 52. The conical spring 92 also forces the hook 82 into engagement with the notch 62. The hook 82 includes a flat surface 94 and a tapered surface 96. The flat and tapered surfaces 94, 96, respectively, mate with the wall and tapered surfaces 64, 66, respectively, defining the notch 62. The latch 32 also includes an optical indicator 98 that enlights the operator to the fact that the hook 82 is not engaged in the notch 62. The optical indicator 98 can be of various colors or designs so that the operator can readily ascertain that the hook 82 is not engaged in the notch 62.

Additionally, a boss 100 is provided to prevent over travel of the latch 32 when a tool mount 24 is not present. Thus, the hook 82 protrudes a desired distance into the channel 40 when a tool mount 24 is not present.

The latch hook 82 geometry is such that a force acting on tool mount 24 will not cause rotation of the latch 32 to release the tool mount 24. The latch hook tapered surface 96 positively locates the tool mount 24 to remove backlash in the coupling direction. Additionally, the latch hook tapered surface 96 also enables the swing arch to freely engage the notch 62. The spring 92 enables a low profile of the latch 32 while providing maximum travel of the release 84. The spring 92 also enables a sufficiently high locking force in a small form factor.

A relief 98 is provided at the bottom of the latching notch 62. This enables the latch hook 82 to fully engage and locate only on the side walls 64, 66 of the notch 62. This provides a repeatable position and eliminates backlash in the direction of the coupling motion.

Insertion of the tool mount 24 into the master mount 22 occurs as follows. The tool mount 24 is inserted into the slot 34 of the master mount 22. As this occurs, the guide 52 is positioned into the channel 40. The tool mount 24 continues into the master mount 22. The taper surface 60 engages the tapered surface 96 of the latch hook 82. This raises the latch hook 82 out of position and enables the latch hook 82 to slide on the guide wall 70. The tool mount 24 continues to be inserted into the master mount 22. The step portions 46, 48, 72, 74 on the flange 42 and wall 54, respectively, engage one another. As the step portion 46, 48, 72, 74 engage, the tool mount 24 begins to align at the end of the slot 34 of master mount 22. This eliminates any binding that may occur during the insertion. Thus, the step portions 46, 48, 72, 74 provide contact points so that there is clearance throughout most of the coupling motion or travel aligning the tool mount 24 only at the end of travel. The tool mount 24 continues to be inserted into the master mount 22. The latch hook 82 begins to be inserted into the notch 62. The spring 92 forces the latch hook 82 inward towards the notch 62. As the tool mount 24 is continued to be pushed inward, the latch hook 82 is inserted into the notch 62. As this occurs, the surfaces 66 and 96 as well 64 and 94 engage one another. Thus, the optical indicator 100 is not visible by the user.

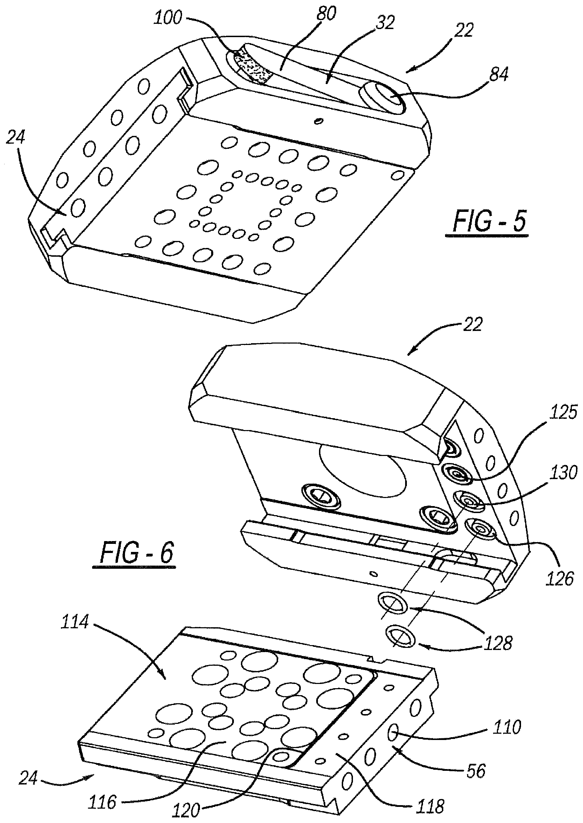

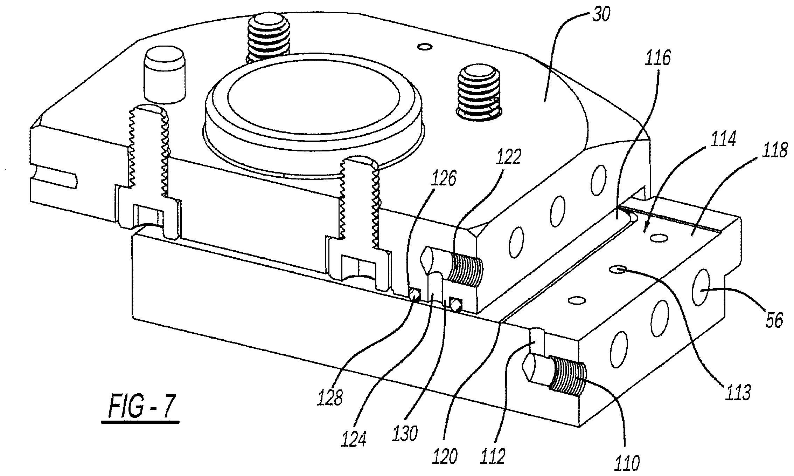

Turning to FIGS. 6-8, the fluid ports 30, 56 will be explained.

The tool mount fluid port (or ports) 56 generally have an overall L-shape. One portion includes a threaded bore 110 to receive a hose or the like. The other bore portion 112 mates with the fluid port 30 of the master mount 22. The tool mount 24 includes a top surface 114. The top surface 114 includes a first portion 116 and a second portion 118. The second portion 118 includes the opening 113 of the bore 112. The second portion 118 is raised with respect to the first portion 116. Thus, a lead-in 120 with a tapered or arcuate surface is formed between the first portion 116 and the second portion 118. The lead-in 120 compresses the seals 128 as the tool mount 24 is moved into the locked position.

The tool mount fluid ports 30 also include a threaded portion 122 and a second bore portion 124. The second bore portion 124 couples with the second bore portion 112 of the tool mount fluid port 56 to enable passage of fluid between the two mounts 22, 24. The threaded portion 122 receives a hose or the like. A recess 126 is circumferentially formed about the second bore portion opening 125. Recesses 126 receive seals 128. The recess 126 forms a pass through boss 130 that includes the second bore portion 124 at its center. The seal 128 is placed into the recess 126 and generally held there by friction of the O-ring seal in the recess 126.

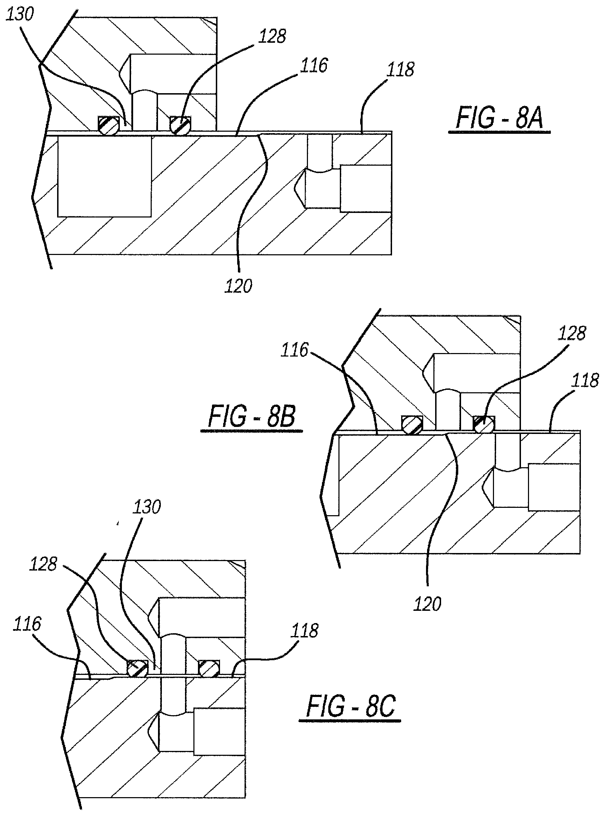

As the tool mount 24 is inserted into the master mount 22, the lead-in 120 contacts the first portion of the seal 128. The seal 128 begins to ride up the lead-in 120 onto the second portion 118. As this occurs, the seal 128 is compressed to provide sealing between the connection between the two fluid ports 30, 56. As the seal 128 continues onto the second portion sealing face 118, the seal 128 is fully compressed and positioned at the end of the coupling of the tool mount 24 with the master mount 22 as illustrated in FIG. 8. Thus, sealing is provided between the two fluid ports. Note that while discussed singularly, the description applies to the plurality.

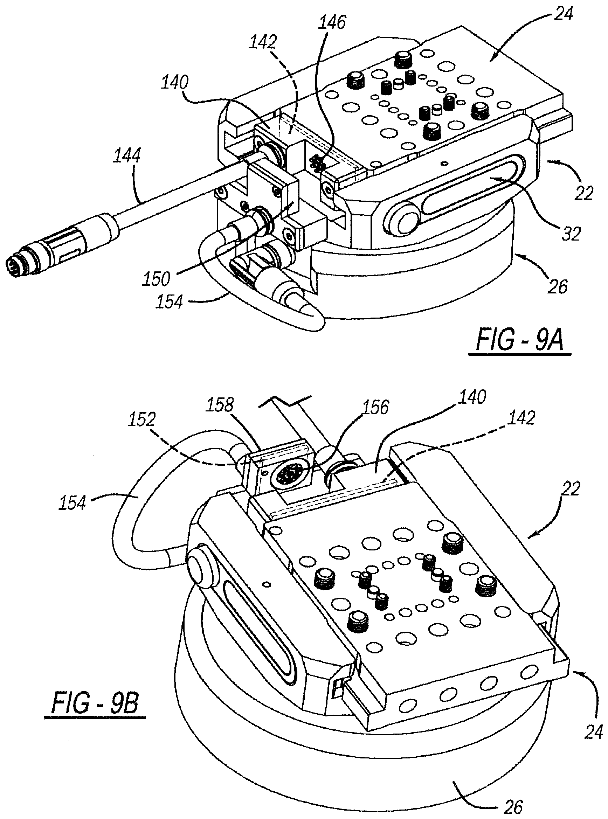

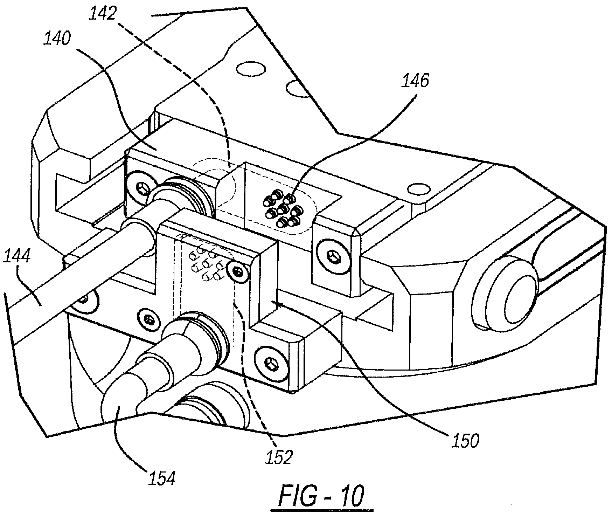

Turning to FIGS. 9 and 10, the electric power and signal coupling is illustrated. The tool mount 24 includes an electrical module 140. The electrical module 140 includes a circuit board 142 coupled with the electrical wire 144 and a plurality of spring probes 146.

The master mount 22 includes an electrical module 150. The electrical module 150 also includes a circuit board 152 as well as a cable 154. The electrical module 150 includes a receptacle 156 to receive the plurality spring probes 146. Also, a flange 158 enables the electrical module 150 to be held onto the master mount 22. The spring probes 146 couple and uncouple in a transverse direction with respect to the mounting flange 158. This decreases the protrusion distance of the module providing a low profile in comparison to an axially coupled module. The electric modules 140, 150 may have a short cable for interfacing with the robot. This eliminates the need for an additional cable to connect the module to the robot's outlet and/or the device attached to the tool plate. The form factor of the module may further be reduced through the use of the printed circuit boards 142, 152. This connects the wires to the interface contacts. The circuit boards 142, 152 enable a degree of preassembly through automatic soldering as well as clearly label wiring connections to reduce the occurrence of assembly error.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A tool changer comprising:
a master mount and a tool mount, the tool mount including a guide received in a slot in the master mount;
a tapered surface on the tool mount leads the tool mount into the master mount;
a latch is coupled with the master mount, the latch moves between a locked and unlocked position;
a notch on the tool mount receives the latch; and
upon inserting the tool mount into the master mount, the latch is moved by the tapered surface and rides along the tool mount as the tool mount is further inserted into the master mount, a bias force moves the latch into engagement with the notch in the latch locking position locking the tool mount with the master mount.

2. The tool changer of Claims 1 and 15, wherein the latch includes a release, wherein the release is activated releasing the bias force of a spring withdrawing the latch, into its unlocked position, from the notch enabling the tool mount to be removed from the master mount.

3. The tool changer of Claim 1, wherein the latch includes a tapered surface and a flat surface.

4. The tool changer of Claim 3, wherein the notch includes mating taper and flat surfaces.

5. The tool changer of Claim 2, wherein the latch includes a visual indicator for identifying the unlocked position.

6. The tool changer of Claims 1 and 15, wherein the slot is defined by a wall surface, the wall surface having at least one step portion.

7. The tool changer of Claim 6, wherein the tool mount includes a wall surface including at least one step portion for mating with the slot wall step portion for alignment of the tool mount in the master mount.

8. The tool changer of Claim 7, wherein the at least one step portions align with one another and are positioned near an end of the slot for aligning the tool mount near an end of travel.

9. The tool changer of Claim 1, wherein the master mount and tool mount include at least one fluid port.

10. The tool changer of Claim 9, wherein the master mount includes at least one recess and at least one seal in the recess, the at least one seal surrounding an end of a bore of the at least one fluid port.

11. The tool changer of Claim 10, wherein a boss surrounds the bore of the at least one fluid port.

12. The tool changer of Claim 10, wherein the tool mount includes a surface having a lead in between a first surface portion and a second surface portion with one of the surface portions raised with respect to the other to compress the at least one seal as the tool mount is moved into a locked position.

13. The tool changer of Claims 1 and 15, wherein the master mount includes a mounting flange with an electrical receptacle.

14. The tool changer of Claim 13, wherein the tool mount includes an electrical module with a plurality of spring probes for coupling and uncoupling, in a transverse direction, with the electrical module.

15. A robot including the tool changer comprising:
a master mount and a tool mount, the tool mount including a guide received in a slot in the master mount;
a tapered surface on the tool mount lead the tool mount into the master mount;
a latch is coupled with the master mount, the latch moves between a locked and unlocked position;
a notch on the tool mount receives the latch; and
upon inserting the tool mount into the master mount, the latch is moved by the tapered surface and rides along the tool mount as the tool mount is further inserted into the master mount, a bias force moves the latch into engagement with the notch in the latch locking position locking the tool mount with the master mount.
